(19) Europäisches Patentamt
European Patent Office
Office européen des brevets

(11) Veröffentlichungsnummer : **0 371 308 B1**

(12) # EUROPÄISCHE PATENTSCHRIFT

(45) Veröffentlichungstag der Patentschrift :
**07.04.93 Patentblatt 93/14**

(51) Int. Cl.$^5$ : **C02F 1/50,** C02F 1/76, A01N 33/12

(21) Anmeldenummer : **89121036.1**

(22) Anmeldetag : **13.11.89**

(54) **Verfahren und Mittel zum Entkeimen von Wasser.**

Die Akte enthält technische Angaben, die nach dem Eingang der Anmeldung eingereicht wurden und die nicht in dieser Patentschrift enthalten sind.

(30) Priorität : **28.11.88 DE 3840103**

(43) Veröffentlichungstag der Anmeldung :
**06.06.90 Patentblatt 90/23**

(45) Bekanntmachung des Hinweises auf die Patenterteilung :
**07.04.93 Patentblatt 93/14**

(84) Benannte Vertragsstaaten :
**AT BE CH DE ES FR GB GR IT LI LU NL SE**

(56) Entgegenhaltungen :
**WO-A-87/02221**
**US-A- 3 778 476**
**US-A- 4 780 216**

(73) Patentinhaber : **BAYROL Chemische Fabrik G.m.b.H.**
**Lochhamer Strasse 29**
**W-8033 München-Martinsried (DE)**

(72) Erfinder : **Metzner, Peter, Dr.**
**Lochhamer Strasse 29**
**W-8033 München-Martinsried (DE)**

(74) Vertreter : **von Hellfeld, Axel, Dr. Dipl.-Phys., et al**
**WUESTHOFF & WUESTHOFF**
**Schweigerstrasse 2**
**W-8000 München 90 (DE)**

**EP 0 371 308 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Entkeimung, insbesondere Entalgung von Wasser mit wasserlöslichen polymeren quaternären Ammoniumverbindungen, sowie ein Mittel, das zur Entkeimung, insbesondere Entalgung, eingesetzt werden kann.

Zur Entalgung von Wasser und zum oxidativen Abbau von im Wasser enthaltenen oxidierbaren Verunreinigungen wird seit langem und in großem Umfang Chlor in Form von Chlorgas oder Chlorbleichlauge verwandt. Diese Chlorung weist bei der Aufbereitung von Wässern und Wassersystemen jedoch eine Reihe von Nachteilen auf, beispielsweise einen stechenden Geruch und die Tendenz zur Schleimhautreizung. Weiterhin wurde festgestellt, daß die Chlorung von Hasser zur Bildung von Halogenverbindungen führen kann, die als cancerogen angesehen werden müssen. Entsprechendes gilt für die Verwendung von Brom anstelle von Chlor.

Es hat deshalb nicht an Versuchen gefehlt, anstelle dieser Halogenverbindungen andere, halogenfreie Desinfektionsmittel für die Hasseraufbereitung, insbesondere für die Aufbereitung von Schwimmbadwasser, zu verwenden. So ist die Verwendung von Peroxidverbindungen, zum Beispiel von Wasserstoffperoxid, Natrium- oder Kaliumpersulfat zur Hasserentkeimung seit langem bekannt. Ebenso bekannt ist die Bekämpfung des Algenwuchses mit Kupferionen und die Entkeimung von Hasser mit Silbersalzen. Auch die Kombination von Peroxidverbindungen mit Silber- bzw. Kupferionen ist beschrieben sowie die Kombination von quaternären Ammoniumverbindungen mit Wasserstoffperoxid (vgl. DE-A-2 235 539, DE-A-2 530 487 und DE-A-2 911 288).

Die DE-A-2 600 466 und DE-A-3 423 703 beschreiben Verfahren zur Verhinderung des Algenwachstums in wäßrigen Systemen, bei welchem die Algen mit einem Kondensationsprodukt aus Tetramethylethylendiamin-Dihydrochlorid und Epichlorhydrin in Berührung gebracht werden. Aus der DE-A-3 247 536 sind algizide Kondensate aus Diaminoalkanen und Harnstoff bzw. Epichlorhydrin bekannt.Es hat sich jedoch gezeigt, daß diese Kondensate hinsichtlich ihrer algiziden Wirkung noch nicht zufriedenstellen, weshalb sie zur Erzielung einer hinreichenden Wirksamkeit zumeist in Verbindung mit Schwermetallionen eingesetzt werden.

Algizide Zusammensetzungen auf Basis monomerer quaternärer Ammoniumverbindungen und Kupfersalzen sind in der US-A-4 098 602 offenbart. Als Ammoniumverbindungen werden dabei Salze vom Benzalkoniumtyp eingesetzt. Diese Verbindungen führen allerdings zu einer unerwünschten Schaumbildung und haben weiterhin den Nachteil, daß sie einen störenden Geruch entwickeln.

In der EP-A-59 978 wird ein Entalgungsverfahren beschrieben, bei dem eine quaternäre Ammoniumverbindung in Verbindung mit wasserlöslichen Kupfersalzen und/oder Silbersalzen und einer sauerstoffabspaltenden Peroxidverbindung eingesetzt wird. Als quaternäre Ammoniumverbindungen können dabei Poly(diallyldimethylammoniumchlorid), Poly(1,4-bis(dimethylazonia)-7-oxanonylendichlorid) und Poly(1,4-bis(dimethylazonia)-6-hydroxyheptylendichlorid) verwandt werden.

Ferner wird in der WO 87/02221 die Verwendung eines Kondensationsproduktes aus Tetramethylhexamethylendiamin und 1,3-Dibrompropan als - insbesondere in Verbindung mit Kupfer und Silberionen hochwirksames - Bakterizid beschrieben.

Die GB-A-2 194 227 offenbart die Verwendung einer polymeren kationischen quaternären Ammoniumverbindung zusammen mit einem Kupfersalz, einem Gelierungsmittel und einem Oxidationsmittel zur Behandlung von Wasser, insbesondere in Schwimmbecken.

Es hat sich aber gezeigt, daß die zur Entalgung von Wasser verwandten quaternären Ammoniumverbindungen von Benzalkoniumtyp zur Schaumbildung neigen und überdies einen unangenehmen Geruch ausströmen. Die polymeren quaternären Ammoniumverbindungen haben andererseits eine nicht ausreichende algizide Wirkung und müssen deshalb in der Regel in Verbindung mit Metallionen, etwa Kupfer-, Silber- oder Manganionen eingesetzt werden. Der Zusatz solcher Metallionen ist aber aus verschiedenen Gründen nicht erwünscht. So führt der Zusatz von Kupfer- und Silberionen aufgrund der elektrochemischen Spannungsreihe zu vermehrter Korrosion der in den behandelten Wassersystemen vorhandenen Metallleitungen. Silberionen führen unter dem Einfluß von Reduktionsmitteln und bei Lichteinwirkung zu schwarzen Silberablagerungen. Ferner ist die Verwendung von Schwermetallionen auch aus Kostengründen und unter dem Gesichtspunkt des Umweltschutzes unerwünscht.

Ferner beschreibt die EP-A-0 203 892 die Verwendung von polymeren Ammoniumverbindungen, bei denen Dimethylammoniumgruppen alternierend durch Alkylengruppen und Dibenzylgruppen voneinander getrennt sind, zur Bekämpfung von Schadorganismen in Wassersystemen. In der DE-A-24 38 035 sind biozide Zusammensetzungen beschrieben, die aus chemischen Komplexen bzw. Gemischen einer quaternären Ammoniumverbindung und einer Isothiazolin-3-on-Verbindung bestehen.

Es ist Ziel der Erfindung, ein Verfahren zur Entkeimung, insbesondere zur Entalgung von Wasser bereitzustellen, das die oben geschilderten Nachteile vermeidet. Hierzu ist es insbesondere erforderlich, eine Verbindung aufzufinden, die über die erwünschte algizide Wirksamkeit verfügt, jedoch nicht zur Schaumbildung neigt und ihre maximale Wirksamkeit auch ohne den Zusatz von Schwermetallionen entfaltet.

Dieses Ziel wird mit dem Verfahren der eingangs geschilderten Art erreicht, das dadurch gekennzeichnet ist, daß dem Hasser als quaternäre Ammoniumverbindung ein polymeres Salz der Formel (I)

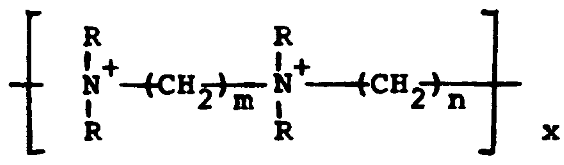

$2\ x\ hal^-$ (I)

worin

R ein $C_1$-$C_7$-Kohlenwasserstoffrest ist;
m und n unabhängig eine ganze Zahl von 4 bis 12 sind;
x eine Zahl von 10 bis 300 ist; und
hal Chlor, Brom oder Iod ist,
in einer Menge von mehr als 0,1 ppm in Kombination mit einem Oxidationsmittel zugesetzt wird.

Gegenstand der Erfindung sind ferner ein Mittel zur Entkeimung, insbesondere zur Entalgung von Wasser, das eine wasserlösliche polymere quaternäre Ammoniumverbindung der Formel (I) sowie zusätzlich ein Oxidationsmittel enthält.

In den polymeren Ammoniumverbindungen der Formel (I) ist R ein Kohlenwasserstoffrest mit 1 bis 7 Kohlenstoffatomen. Vorzugsweise ist R Methyl, Ethyl oder Benzyl, besonders bevorzugt Methyl.

Die die Kettenlänge der Alkylengruppen zwischen den Stickstoffatomen kennzeichnenden Indizes m und n stehen unabhängig voneinander für eine Zahl von 4 bis 12. Dies bedeutet, daß jede einzelne der Alkylengruppen der polymeren Kette 4 bis 12 Kohlenstoffatome aufweist, die einzelnen Alkyleneinheiten jedoch hinsichtlich der Anzahl der Kohlenstoffatome voneinander verschieden sein können. Innerhalb der Polymerketten können m und n jeweils, in Abhängigkeit von den verwandten Ausgangsmaterialien, verschiedene Werte annehmen, d.h in einer Polymerkette kann m 2 oder auch 3 verschiedene Werte annehmen, ebenso n. In der Regel haben aber m und n innerhalb eine Polymerkette jeweils gleiche Werte; in diesem Fall treten die jeweiligen Alkyleneinheiten alternierend auf.

Besonders bevorzugt sind polymere Ammoniumverbindungen, in denen eines aus m und n 6 ist und das jeweils andere eine Zahl von 4 bis 12. Hiervon sind wiederum besonders bevorzugt solche quaternären Ammoniumverbindungen, in denen eines aus m und n 6 ist und das andere 4, 6 oder 12. Ganz besonders bevorzugt sind Verbindungen, in denen sowohl m als auch n 6 ist. Hierdurch werden Polymere erhalten, in denen die jeweiligen Ammoniumgruppen durch Alkylengruppen gleicher Länge getrennt sind.

Es ist auch möglich, die Polymerketten mit wechselnden Anteilen unterschiedlich langer Alkylengruppen auszustatten. So kann beispielsweise eines aus m und n 6 sein und das jeweils andere für 4, 6 und 12 stehen, wobei diese zu unterschiedlichen Anteilen zugegen sind. So ist es beispielsweise möglich, Polymere zu schaffen, die 80 % aus Hexamethyleneinheiten enthalten und je 10 % Tetramethylen- und Dodecamethylengruppen. Je nach eingesetzten Ausgangsmaterial können diese verschieden Alkylengruppen statistisch oder mehr oder weniger geordnet über die Polymerkette verteilt sein.

Polymere Ammoniumverbindungen der Formel (I), worin m oder n kleiner ist als 4, zeigen nicht die erwünschte starke algizide Wirkung. Beispielsweise zeigt eine polymere Ammoniumverbindung mit m gleich 5 und n gleich 2 ein stark eingeschränkte Wirksamkeit und eine solche, in der m und n 2 sind, eine noch geringere Wirksamkeit. Optimale Ergebnisse werden mit polymeren Ammoniumverbindungen der Formel (I) erzielt, in denen wenigstens eines aus m und n 6 ist.

Die Kettenlänge der erfindungsgemäß verwandten Polymere der Formel (I) kann innerhalb weiter Grenzen variieren. So können, auch in Abhängigkeit von der Art der Herstellung, polymere Ammoniumverbindungen mit einem Molekulargewicht von bis zu 40.000 eingesetzt werden. Im allgemeinen ist x eine Zahl von 10 bis 300, bevorzugt von 50 bis 200. Am stärksten bevorzugt sind Ionomere, in denen x 100 bis 150 ist.

Beim erfindungsgemäßen Verfahren werden die quaternären Ammoniumverbindungen der Formel (I) zusammen mit einem Oxidationsmittel eingesetzt. Als Oxidationsmittel eignen sich beispielsweise sauerstoffabspaltende Verbindungen, etwa Natrium- und Kaliumpersulfat und -peroxidisulfat, sowie wäßrige Lösungen von Wasserstoffperoxid. Es können auch andere Peroxiverbindungen eingesetzt werden. Andere geeignete Oxidationsmittel sind beispielsweise Trichlorisocyanursäure, Natriumdichlorisocyanurat und unterchlorige Säure. Besonders bevorzugt sind Kalium- und Natriummonopersulfat und -peroxidisulfat, $Na_2SO_5$ und $K_2SO_5$ bzw. $Na_2S_2O_8$ und $K_2S_2O_8$, da sie in Verbindung mit den quaternären Ammoniumverbindungen der Formel (I) eine ausgezeichnete Wirkung entfalten und bei ihrem Einsatz kein elementares Chlor entsteht.

Die polymeren Ammoniumverbindungen der Formel (I) und die Oxidationsmittel können zusammen mit anderen üblichen Zusätzen einsesetzt werden, beispielsweise Konditionierungsmitteln, Stabilisatoren, Lösungsvermittlern, Auflösungshilfsmitteln etc. Die Gegenwart solcher Zusätze kann insbesondere für die Herstellung, Lagerung und Stabilisierung sowie den Einsatz der erfindungsgemäßen Zusammensetzungen erforderlich sein.

Bei der Durchführung des erfindungsgemäßen Verfahrens werden die quaternären Ammoniumverbindungen der Formel (I) vorzugsweise in Mengen von 0,1 bis 10 ppm, bezogen auf das zu behandelnde Hasser eingesetzt. Bevorzugte Mengen sind 0,2 bis 5 ppm. Gewöhnlich wird dabei nur eine polymere Ammoniumverbindung der Formel (I) eingesetzt; es können aber auch mehrere dieser Verbindungen nebeneinander vorliegen. Neben den Polymeren der Formel (I) können auch andere Verbindungen mit algizider und/oder bakterizider Wirkung verwandt werden, insbesondere dann, wenn deren Gegenwart zu Erzielung besondere Effekte, beispielsweise bei der Bekämpfung besonderer Algen- oder Bakterienarten, vorteilhaft ist.

Das erfindungsgemäße Verfahren beruht auf der Erkenntnis, daß die polymeren Ammoniumverbindungen der Formel (I) über eine ausgezeichnete und breite algizide Wirkung verfügen, die wesentlich stärker ausgeprägt ist, als die anderer (polymerer) quaternärer Ammoniumverbindungen. Dabei hängt das Ausmaß der algiziden Wirkung wesentlich von der Kettenlänge der zwischen den einzelnen Ammoniumgruppen angeordneten Alkylengruppen ab. Sind weniger als 4 oder mehr als 12 Methylengruppen vorhanden, so ist die algizide Wirkung unzureichend; ein Optimum wird bei einer Kettenlänge von 6 Methylengruppen erreicht. Eine hohe algizide Wirkung wird auch dann erreicht, wenn innerhalb einer Polymerkette Alkylengruppen verschiedenen Kettenlängen, die aber innerhalb der vorstehend aufgezeigten Bereiche liegen, verwandt werden. Sind jedoch nennenswerte Mengen von Alkylengruppen mit weniger als 4 oder mehr als 12 Kohlenstoffatomen vorhanden, so läßt die algizide Wirkung deutlich nach.

Neben der algiziden Wirkung entfalten die erfindungsgemäß eingesetzten polymeren Ammoniumverbindungen auch eine beachtliche bakteriostatische und/oder bakterizide Wirkung. Dies ist insbesondere dann von Vorteil, wenn das erfindungsgemäße Verfahren auf die Entalgung von Schwimmbädern angewandt wird; hier kommt es darauf an, die Bakterienkonzentrationen innerhalb tolerierbarer Grenzen zu halten, ohne daß völlige Sterilität verlangt ist.

Beim erfindunsgemäßen Einsatz der polymeren Ammoniumverbindungen ergeben sich mehrere Vorteile. So kann auf den Einsatz von elementarem Chlor oder von elementares Chlor freisetzenden Verbindungen verzichtet werden, obwohl eine solche Kombination durchaus möglich ist. Weiterhin kann auf den Einsatz von Schwermetallionen, etwa von Kupfer-, Silber- und Manganionen, der zunehmend als problematisch angesehen wird und - auch aus Gründen des Umwelt- und Gewässerschutzes - unerwünscht ist, verzichtet werden. Schließlich ergibt sich neben der in erster Linie erwünschten algiziden Wirkung auch eine beachtliche bakteriostatische oder gar bakterizide Wirkung.

Das erfindungsgemäße Verfahren und die dafür geeigneten polymeren Ammoniumverbindungen bzw. die diese enthaltenden Mittel sind in erster Linie für die Entalgung von Schwimmbädern geeignet. Darüberhinaus können sie aber auch in anderen Wassersystemen eingesetzt werden, wo es auf Algenfreiheit ankommt, beispielsweise in Kühltürmen und Kühlsystemen sowie in Wasserreservoirs für technische oder industrielle Zwecke.

Die Herstellung der erfindungsgemäß zu verwendenden Verbindungen ist an und für sich bekannt; es wird in diesem Zusammenhang auf Houben-Weyl, Methoden der organischen Chemie, Georg Thieme Verlag, Stuttgart und New York, 1987, Band E20, Kapitel 2.3 "Poly(ionene)", S. 1491 ff., und die dort zitierte Literatur hingewiesen. Weitere Herstellungsverfahren sind aus der US-A-3 898 336 bekannt.

Bei der Herstellung wird im allgemeinen von einem Diamin der Formel (II)

$$R_2N-(CH_2)_m-NR_2 \qquad (II)$$

ausgegangen, das mit einer Dihalogenverbindung der Formel (III)

$$hal-(CH_2)_n-hal \qquad (III)$$

unter Bildung des polymeren Ionens (I)

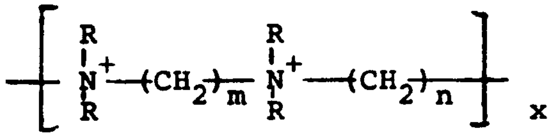 2x hal$^-$ (I)

worin die Abkürzungen wie vorstehend definiert sind, umgesetzt wird.

Es können auch mehrere Verbindungen der Formel (II), in denen R und/oder m jeweils unterschiedlich definiert sind, dabei aber den vorstehenden Definitionen genügen, mit einer oder mehreren Verbindungen der Formel (III) umgesetzt werden. In diesem Falle werden als Produkte polymere Ionene erhalten, in denen unterschiedliche Substituenten R und/oder Alkylengruppen mit unterschiedlichen Kettenlängen und/oder Mischungen von Halogenionen vorliegen.

Um zu verhindern, daß die gebildeten polymeren Ammoniumverbindungen endständig covalent gebundene Halogenatome enthalten, ist es bevorzugt, bei der Reaktion das Diamin der Formel (II) in einem geringen Überschuß über die Dihalogenverbindung einzusetzen. Auf diese Art und Weise werden polymere Ammoniumverbindungen erhalten, deren Polymerketten endständig durch Gruppen der Formel (IV)

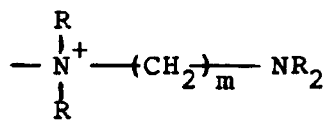 (IV)

begrenzt werden.

Die die algiziden polymeren Ammoniumverbindungen der Formel (I) enthaltenden erfindungsgemäßen Zusammensetzungen bestehen im allgemeinen zu 5 bis 100 Gew.-% aus quaternären Ammoniumverbindungen der Formel (I), zu 0 bis 95 Gew.-% aus einem starken Oxidationsmittel und zu 0 bis 50 Gew.-% aus üblichen Zusatz- und Hilfsstoffen. Diese Zusammensetzungen werden dem zu behandelnden Wasser in Mengen zugesetzt, die eine Konzentration von mehr als 0,1 ppm, bezogen auf das Gewicht, an polymerer Ammoniumverbindung der Formel (I) gewährleisten. Die Zusammensetzungen können als flüssiges Konzentrat in wäßriger verdünnter Lösung oder in Pulver oder Tablettenform vorliegen.

Die Herstellung der erfindungsgäßen einzusetzenden Polyammoniumverbindungen der Formel (I) wird durch die nachstehenden Beispiele erläutert.

Beispiel 1

Poly [(dimethylammoniono)-1,6-hexylen-bromid] (R = $CH_3$; m = n = 6)

Eine Mischung aus 6,883 g (40 mmol) 1,6-Bis- dimethyleamino -hexan und 9,758 g (40 mmol) 1,6-Dibromhexan wird ömit Dimethylformamid/Methanol (1:1) auf ein Gesamtvol. von 27 ml aufgefüllt und 2 Tage bei 20°C geführt. Der farblose Feststoff wird abgetrennt, in 10 ml Wasser gelöst, durch Eintropfen dieser Lösung in 200 ml Aceton ausgefällt und bei 50°C Vak. getrocknet; Ausbeute: 8,7 g (71 %) (farbloses Pulver); n = 26,8 ml/g (4M Kaliumbromid-Lösung); Molmasse: ca. 35000.

Beispiel 2

Poly [1,5-bis(dimethylazonia)nonylendibromid] (R = $CH_3$; m = 3; n = 4)

6,26 g N,N,N′,N′-Tetramethyl-1,3-diaminopropan und 10,4 g 1,4-Dibrombutan wurden in 25 ml Methanol gelöst. Die resultierende Lösung wurde bei 25°C eine Woche äquilibriert. Eine danach vorgenommene Analyse zeigte eine Umsetzung von 99,5 % des ursprünglich eingesetzten Materials. Das Lösungsmittel wurde dann im Vakuum abgezogen und das resultierende Polymer im Vakuum bei 40°C 24 Stunden getrocknet, wobei 16,7 g polymeres Produkt erhalten wurden. Ausbeute: 88 %; n = 19,4 ml/g (0,5 M KBr).

Zum Nachweis der überraschenden Wirkung der erfindungsgemäß einzusetzenden polymeren Ammoniumverbindungen wurden Vergleichsversuchen durchgeführt, deren Ergebnisse in den nachfolgenden Tabellen enthalten sind. Als Testalgen wurden solche der Gattung Chlorella und eine kugelige Grünalge verwandt. Ferner wurde auch die Keimtötungsgeschwindigkeit an verschiedenen Testkeimen gemessen. Die Messung erfolgte dabei gemäß den "Empfehlungen für die Prüfung und Bewertung der Wirksamkeit chemischer Desinfektionsverfahren", Zbl. Bakt. Hyg. I, Abt. Orig. B 165, 335 bis 380 (1977). Als Testkeime wurden E. coli, Pseudomonas aeruginosa und Staphylococcus aureus verwandt. Die Ergebnisse der Tests sind in Tabellen 1 bis 7 zusammengefaßt.

Die algizide Wirksamkeit wurde visuell bewertet (vis.) und parallel dazu photometrisch (phot.). In den Tabellen werden die nachstehenden Abkürzungen verwandt:

vis. Beurteilung:

++++ sehr starkes Wachstum
+++ starkes Wachstum
++ Wachstum
\+ eingeschränktes Waschstum
\- kein Wachstum

Q 6/6 Polyionen mit R = $CH_3$, m = 6, n = 6, hal = Cl
Q 4/6 Polyionen mit R = $CH_3$, m = 4, n = 6, hal = Cl
Q 12/6 Polyionen mit R = $CH_3$, m = 12, n = 6, hal = Cl
Q-Mix Polyionen mit R = $CH_3$, hal = Cl, 80 % $C_6$-, 10 % $C_4$- und 10 % $C_{12}$-Alkylen
DDBA Dodecyldimethylbenzylammoniumchlorid
Polymer W Poly(1,4-bis(dimethylazonia)-6-hydroxyheptylendichlorid
Polymer H Poly(diallyldimethylammoniumchlorid)

Tabelle 1 zeigt die Wirksamkeit verschiedener polymerer Ammoniumverbindungen gegenüber einem Testorganismus der Gattung Chlorella nach 11- bzw. 14-tägiger Inkubationszeit im Vergleich zu einem herkömmlichen Algizid.

Alle Verbindungen wurden in 50 %-iger wäßriger Lösung zugesetzt, bis die in Tabelle 1 angegebenen Konzentrationen erreicht waren.

Von den getesteten polymeren Verbindungen zeigt Q 6/6 bereits bei einer Konzentration von 0,5 ppm volle algizide Wirksamkeit, vergleichbar mit dem als gut wirksames Algizid bekannten Dodecyldimethylbenzylammoniumchlorid.

Tabelle 2 zeigt die Wirksamkeit der polymeren Ammoniumverbindung Q 6/6 gegenüber einer Alge der Gattung Chlorella nach zweiwöchiger Inkubationszeit. Zum Vergleich wurden auch bekannte Algizide (Polymer W; DDBA) mitgetestet. Im Vergleich zu dem seit langem als Algizid in der Wasseraufbereitung verwandten Polymer W ist Q 6/6 in seiner algiziden Wirkung erheblich besser.

Es zeigt sich, daß die algizide Wirksamkeit von Q 6/6 bei etwa 0,5 ppm einsetzt. Der Gehalt an Kupferionen hat keinen nennenswerten Einfluß auf die algizide Wirksamkeit gegenüber dieser Alge. Tabelle 3 zeigt, daß Kupferionen auf die Wirksamkeit von Q 6/6 keinen Einfluß haben.

Tabelle 4 zeigt die Wirksamkeit einer Reihe von algizid wirkenden Verbindungen gegenüber einer kugeligen Grünalge nach einer Inkubationszeit von 14 Tagen. Die Ergebnisse von Tabelle 3 wurden mit einer Zusammensetzung mit 30 % Wirkstoffgehalt erzielt.

Die polymeren Ammoniumverbindungen der Formel (I) erwiesen sich anderen bekannten als überlegen (Polymer H, Polymer W) oder als zumindest gleichwertig (DDBA). Im Gegensatz zu DDBA handelt es sich aber bei Q 6/6 bzw. Q-Mix um schaumfreie und geruchsarme Mittel.

Die polymeren Ammoniumverbindungen der Formel (I) zeigen ferner eine erhebliche bakterizide Wirkung gegenüber verschiedenen Mikroorganismen, wie aus den Tabellen 5 bis 7 hervorgeht.

Die polymere Ammoniumverbindung Q 6/6 ist in Verbindung mit Kaliummonopersulfat in Anwesenheit wie in Abwesenheit von Kupfer-II-ionen bakterizid wirksam. Diese Wirksamkeit ist gegenüber E. coli etwas schlechter, als die eines Vergleichspräparats auf Basis des bekannten Mittels Polymer W, andererseits gegenüber Pseudomonas aeroginusa deutlich besser; hier ist Polymer W praktisch unwirksam. Gegenüber Staphylococcus aureus ergibt sich eine Wirksamkeit, die der von Polymer W vergleichbar ist.

Bemerkenswert ist jedoch, daß der für die Aufbereitung und Desinfektion von Schwimmbadwasser relevante Keim Pseudonomas aeruginosa - der als zu prüfender Keim in DIN 19643 genannt wird - von der Kombination Q 6/6 + Bayroklar$^R$ innerhalb von nur 5 min um fast 4 Zehnerpotenzen reduziert wird.

**Tabelle 1**

Algizide Wirksamkeit nach 11- bzw. 14-tägiger Inkubationszeit in Abhängigkeit von der Konzentration gegenüber Chlorella sp.

| Konz./ppm | Q 6/6* | | Q 4/6* | | Q 12/6* | | Q 4/4** | |
|---|---|---|---|---|---|---|---|---|
| | (vis) | (phot) | (vis) | (phot) | (vis) | (phot) | (vis) | (phot) |
| 0,0 | ++++ | 0,28 | ++++ | 0,28 | ++++ | 0,28 | ++++ | 0,24 |
| 0,5 | - | 0,04 | ++ | 0,14 | ++ | 0,12 | ++ | 0,10 |
| 1,0 | - | 0,03 | ± | 0,05 | - | 0,05 | - | 0,04 |
| 1,5 | - | 0,03 | - | 0,03 | - | 0,03 | - | 0,03 |
| 2,0 | - | 0,03 | - | 0,03 | - | 0,03 | - | 0,03 |
| 2,5 | | | - | 0,03 | - | 0,03 | - | 0,02 |
| 3,0 | | | | | | | - | 0,03 |

* Inkubationszeit 11 Tage
** Inkubationszeit 14 Tage

Tabelle 2

**Algizide Wirksamkeit nach 14-tägiger Inkubationszeit in Abhängigkeit von der Konzentration gegenüber Chlorella**

| Konz./ppm | Q 6/6 | | DDBA | | Polymer W | |
|---|---|---|---|---|---|---|
| | (vis) | (phot) | (vis) | (phot) | (vis) | (phot) |
| 0,0 | ++++ | 0,24 | ++++ | 0,24 | ++++ | 0,24 |
| 0,5 | - | 0,04 | ++ | 0,10 | ++++ | 0,23 |
| 1,0 | - | 0,03 | - | 0,04 | ++ | 0,17 |
| 2,0 | - | 0,03 | - | 0,03 | ++ | 0,11 |
| 3,0 | - | 0,03 | - | 0,03 | ++ | 0,10 |
| 4,0 | - | 0,03 | - | 0,03 | + | 0,07 |
| 5,0 | - | 0,03 | - | 0,03 | - | 0,04 |

## Tabelle 3

**Algizide Wirksamkeit nach 14-tägiger Inkubationszeit in Abhängigkeit von der Konzentration gegenüber Chlorella**

| Konz. ppm | Q 6/6 | | Q 6/6 + $Cu^{++*}$ | | Q 6/6 + $Cu^{++**}$ | |
|---|---|---|---|---|---|---|
| | (vis) | (phot) | (vis) | (phot) | (vis) | (phot) |
| 0,0 | ++++ | 0,24 | ++++ | 0,24 | ++++ | 0,24 |
| 0,5 | - | 0,04 | - | 0,03 | - | 0,03 |
| 1,0 | - | 0,03 | - | 0,03 | - | 0,03 |

* 10 Gew.-Teile $Cu^{2+}$ auf 100 Gew.-Teile Q 6/6

* 5 Gew.-Teile $Cu^{2+}$ auf 100 Gew.-Teile Q 6/6

## Tabelle 4

Algizide Wirksamkeit nach 14-tägiger Inkubationszeit in Abhängigkeit von der Konzentration gegenüber einer kugeligen Grünalge

| Konz./ppm | Polymer H | | Q-Mix | | Polymer W | | Q 6/6 | | DDBA | |
|---|---|---|---|---|---|---|---|---|---|---|
| | (vis) | (phot) | (vis) | (phot) | (vis) | (phot) | (vis) | (phot) | (vis) | (phot) |
| 0 | +++ | 0,22 | +++ | 0,22 | +++ | 0,22 | +++ | 0,22 | +++ | 0,22 |
| 0,3 | +++ | 0,21 | +++ | 0,20 | +++ | 0,17 | +++ | 0,19 | +++ | 0,15 |
| 0,6 | +++ | 0,20 | +++ | 0,19 | +++ | 0,18 | +++ | 0,18 | +++ | 0,14 |
| 0,9 | +++ | 0,20 | +++ | 0,19 | +++ | 0,18 | +++ | 0,15 | +++ | 0,12 |
| 1,2 | +++ | 0,20 | +++ | 0,18 | +++ | 0,17 | ++ | 0,12 | ++ | 0,12 |
| 1,8 | +++ | 0,19 | +++ | 0,16 | +++ | 0,18 | + | 0,12 | + | 0,11 |
| 2,4 | +++ | 0,19 | ++ | 0,16 | ++ | 0,16 | - | 0,10 | + | 0,10 |
| 3,0 | +++ | 0,19 | + | 0,14 | ++ | 0,15 | - | 0,08 | - | 0,10 |
| 3,6 | +++ | 0,18 | - | 0,10 | ++ | 0,14 | - | 0,08 | - | 0,08 |
| 4,2 | +++ | 0,18 | - | 0,08 | ++ | 0,14 | - | 0,09 | - | 0,08 |
| 4,8 | ++ | 0,18 | - | 0,09 | ++ | 0,13 | - | 0,08 | - | 0,08 |

**T a b e l l e 5**

Bakterizide Wirkung gegenüber E. coli in Leitungswasser; Keimdichte 2,7 x $10^6$ KBE/ml (Restkeimdichte in KBE/ml; log RF)

| | 0,5 min | 1 min | 3 min | 5 min | 15 min |
|---|---|---|---|---|---|
| (A) 7,5 ppm Q 6/6<br>0,5 ppm $Cu^{2+}$<br>10,0 ppm Bayroklar$^R$ | 3 x $10^4$<br>(1,95) | 6 x $10^3$<br>(2,65) | 400<br>(3,83) | 70<br>(4,59) | 10<br>( 5,4) |
| (B) 7,5 ppm Q 6/6<br>10,0 ppm Bayroklar$^R$ | 2,7 x $10^5$<br>(1,0) | 1,5 x $10^5$<br>(1,26) | 8 x $10^3$<br>(2,53) | 650<br>(3 ,62) | 60<br>(4,65) |
| (C) 7,5 ppm Polymer W<br>0,5 ppm $Cu^{2+}$<br>10,0 ppm Bayroklar$^R$ | 1,5 x $10^4$<br>(2,26) | 2 x $10^3$<br>(3,13) | 170<br>(4,2) | 20<br>(5,13) | 10<br>( 5,4) |
| (D) 7,5 ppm Polymer W<br>10,0 ppm Bayroklar$^R$ | 1,4 x $10^5$<br>(1,29) | 1 x $10^5$<br>(1,43) | 3 x $10^3$<br>(2,95) | 180<br>(4,18) | 30<br>(4,95) |

Tabelle 6

Bakterizide Wirkung gegenüber Pseudomonas aeruginosa; Keimdichte $1 \times 10^6$ KBE/ml Leitungswasser (Restkeimdichte in KBE/ml; log RF)

| | 0,5 min | 1 min | 3 min | 5 min | 15 min |
|---|---|---|---|---|---|
| (E) 7,5 ppm Q 6/6<br>0,5 ppm $Cu^{2+}$<br>10,0 ppm Bayroklar$^R$ | $6x10^4$ (1,22) | $3,4x10^3$ (2,47) | 130 (3,89) | 40 (4,4) | 10 (5) |
| (F) 7,5 ppm Q 6/6<br>10,0 ppm Bayroklar$^R$ | $3,8x10^5$ (0,42) | $1,2x10^4$ (1,92) | $7,4x10^2$ (3,13) | 200 (3,7) | 10 (5) |
| (G) 7,5 ppm Polymer W<br>0,5 ppm $Cu^{2+}$<br>10,0 ppm Bayroklar$^R$ | $4,1x10^5$ (0,39) | $2x10^4$ (1,7) | 810 (3,1) | 300 (3,52) | 110 (3,96) |
| (H) 7,5 ppm Polymer W<br>10,0 ppm Bayroklar$^R$ | $1x10^6$ (0) | $1x10^6$ (0) | $7,1x10^5$ (0,15) | $7,0x10^5$ (0,15) | $3x10^5$ (0,52) |

Tabelle 7

Bakterizide Wirkung gegenüber Staphylococcus aureus; Keimdichte $9,5 \times 10^5$ KBE/ml Leitungswasser (Restkeimdichte in KBE/ml; log RF)

| | 0,5 min | 1 min | 3 min | 5 min | 15 min |
|---|---|---|---|---|---|
| (I) 7,5 ppm Q 6/6<br>0,5 ppm $Cu^{2+}$<br>10,0 ppm Bayroklar$^R$ | $1,2x10^4$ (1,9) | 900 (3,0) | 50 (4,28) | 20 (4,68) | 10 (4,68) |
| (J) 7,5 ppm Q 6/6<br>10,0 ppm Bayroklar$^R$ | $4,5x10^5$ (0,32) | $1,2x10^5$ (0,99) | $5,6x10^3$ (2,23) | $3,5x10^2$ (3,43) | 20 (4,48) |
| (K) 7,5 ppm Polymer W<br>0,5 ppm $Cu^{2+}$<br>10,0 ppm Bayroklar$^R$ | $3,6x10^4$ (0,42) | $3,3x10^3$ (2,46) | $1,2x10^2$ (3,99) | 90 (4,02) | 10 (4,98) |
| (L) 7,5 ppm Polymer W<br>10,0 ppm Bayroklar$^R$ | $3,6x10^5$ (0,18) | $5,6x10^5$ (0,23) | $4,1x10^4$ (1,36) | $1,3x10^3$ (2,86) | 30 (4,5) |

## Patentansprüche

1. Verfahren zur Entkeimung, insbesondere Entalgung, von Wasser mit wasserlöslichen quaternären Ammoniumverbindungen,
dadurch **gekennzeichnet,**
daß dem Wasser als quaternäre Ammoniumverbindung wenigstens ein polymeres Salz der Formel (I)

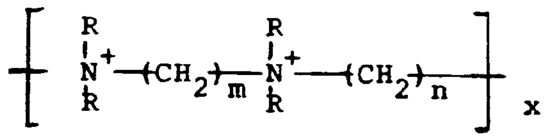

$2\ x\ hal^-$ (I)

worin
R ein $C_1$-$C_7$-Kohlenwasserstoffrest ist;
m und n unabhängig voneinander eine Zahl von 4 bis 12 sind;
x eine Zahl von 10 bis 300 ist; und
hal Chlor, Brom oder Iod ist,
in einer Menge von mehr als 0,1 ppm in Kombination mit einem Oxidationsmittel zugesetzt wird.

2. Verfahren nach Anspruch 1,
dadurch **gekennzeichnet,**
daß R Methyl und hal Chlor ist.

3. Verfahren nach Anspruch 1 oder 2,
dadurch **gekennzeichnet,**
daß m 4, 6 oder 12 und n 6 ist.

4. Verfahren nach Anspruch 1,
dadurch **gekennzeichnet,**
daß m und n 6 sind.

5. Verfahren nach Anspruch 1,
dadurch **gekennzeichnet,**
daß das Oxidationsmittel $K_2SO_5$ oder $K_2S_2O_8$ ist.

6. Mittel zur Entkeimung, insbesondere zur Entalgung, von Wasser nach dem Verfahren nach Anspruch 1,
dadurch **gekennzeichnet,**
daß es eine wasserlösliche polymere quaternäre Ammoniumverbindung der Formel (I)

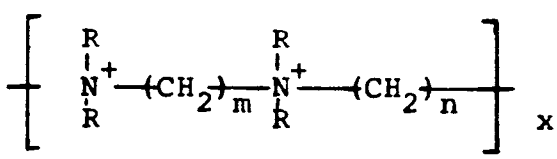

$2\ x\ hal^-$ (I)

worin
R ein $C_1$-$C_7$-Kohlenwasserstoffrest ist;
m und n unabhängig voneinander eine Zahl von 4 bis 12 sind;
x eine Zahl von 10 bis 300 und
hal Chlor, Brom oder Iod ist, sowie zusätzlich ein Oxidationsmittel enthält.

7. Mittel nach Anspruch 6,
dadurch **gekennzeichnet,**
daß es als Oxidationsmitel $K_2SO_5$ oder $K_2S_2O_8$ enthält.

8. Mittel nach einem der Ansprüche 6 und 7,

dadurch **gekennzeichnet,**
daß es in Tablettenform vorliegt.

## Claims

**1.** Method for disinfecting water, in particular eliminating algae therefrom, with water-soluble quaternary ammonium compounds,
characterized in
that there is added to the water as quaternary ammonium compound at least one polymeric salt of the formula (I)

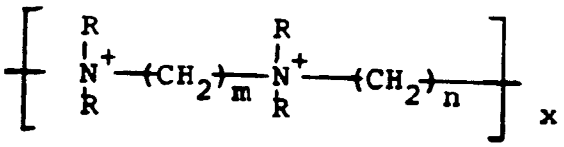 2 x hal⁻ (I)

wherein R is a $C_1$-$C_7$ hydrocarbon radical;
m and n are independently of each other a number from 4 to 12;
x is a number from 10 to 300; and
hal is chlorine, bromine or iodine,
in an amount of more than 0.1 ppm in combination with an oxidizimg agent.

**2.** Method according to claim 1,
characterized in
that R is methyl and hal is chlorine.

**3.** Method according to claim 1 or 2,
characterized in
that m is 4, 6 or 12 and n is 6.

**4.** Method according to claim 1,
characterized in
that m and n are 6.

**5.** Method according to claim 1,
characterized in
that the oxidizing agent is $K_2SO_5$ or $K_2S_2O_8$.

**6.** Agent for disinfecting water, in particular eliminating algae therefrom, according to the method set forth in claim 1,
characterized in
that it contains a water-soluble polymeriC quaternary ammonium compound of the formula (1)

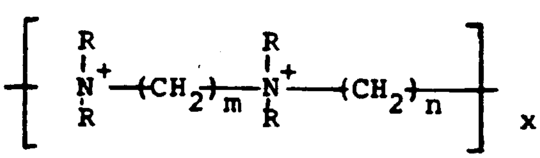 2 x hal⁻ (I)

wherein R is a $C_1$-$C_7$ hydrocarbon radical;
m and n are independently of each other a number from 4 to 12;
x is a number from 10 to 300; and
hal is chlorine, bromine or iodine, and additionally an oxidizing agent.

**7.** Agent according to claim 6,
characterized in

that it contains as oxidizing agent $K_2SO_5$ or $K_2S_2O_8$.

8. Agent according to any one of claims 6 and 7,
characterized in
that it is in tablet form.

## Revendications

1. Procédé pour la désinfection d'eau, en particulier la destruction d'algues contenues dans l'eau, à l'aide de composés d'ammonium quaternaire solubles dans l'eau, caractérisé en ce que l'on ajoute à l'eau, en tant que composé d'ammonium quaternaire, au moins un sel polymère de formule (I)

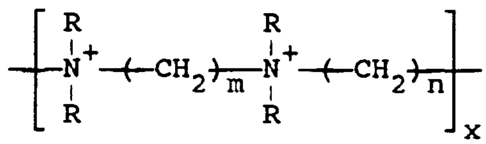

2 × hal$^-$ (I)

dans laquelle

| | |
|---|---|
| R | est un radical hydrocarboné en $C_1$-$C_7$, |
| m et n | sont, indépendamment l'un de l'autre, un nombre allant de 4 à 12, |
| x | est un nombre allant de 10 à 300, et |
| hal | est le chlore, le brome ou l'iode, en une quantité de plus de 0,1 ppm, en association avec un oxydant. |

2. Procédé selon la revendication 1, caractérisé en ce que R est le groupe méthyle et hal est le chlore.

3. Procédé selon la revendication 1 ou 2, caractérisé en ce que m est 4, 6 ou 12, et n est 6.

4. Procédé selon la revendication 1, caractérisé en ce que m et n sont 6.

5. Procédé selon la revendication 1, caractérisé en ce que l'oxydant est $K_2SO_5$ ou $K_2S_2O_8$.

6. Agent pour la désinfection d'eau, en particulier pour la destruction d'algues, selon le procédé conforme à la revendication 1, caractérisé en ce qu'il contient un composé d'ammonium quaternaire polymère soluble dans l'eau, de formule (I)

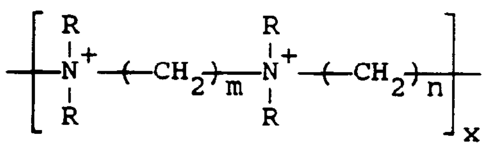

2 × hal$^-$ (I)

dans laquelle

| | |
|---|---|
| R | est un radical hydrocarboné en $C_1$-$C_7$, |
| m et n | sont, indépendamment l'un de l'autre, un nombre allant de 4 à 12, |
| x | est un nombre allant de 10 à 300, et |
| hal | est le chlore, le brome ou l'iode, ainsi qu'en outre un oxydant. |

7. Agent selon la revendication 6, caractérisé en ce qu'il contient, en tant qu'oxydant, $K_2SO_5$ ou $K_2S_2O_8$.

8. Agent selon l'une des revendications 6 et 7, caractérisé en ce qu'il se présente sous forme de comprimés.